# EUROPEAN PATENT APPLICATION

(11) **EP 1 452 365 A1**
(43) Date of publication of application: **01.09.2004**
(21) Application number: 03425132.2
(22) Date of filing: 28.02.2003
(51) Int. Cl.: B60J 7/04, B60J 7/20, B60J 7/047

(54) **A motor car which can be configured selectively either as a spider or as a coupé**

(71) Applicant: Bertone S.p.A., 10141 Torino (IT)
(72) Inventor: De Bonis Sciaraffia, Michele, 85010 Pignola (Potenza) (IT)
(74) Representative: Gerbino, Angelo

(57) **Abstract**

The motor car includes a rear luggage compartment (10) with an upper closure member (12) and a roof (14) having an aperture over the median and rear portions of the passenger compartment (16) with associated first and second slidable panels (20, 22) which can be positioned selectively to a first configuration closing the aperture (18), in which the panels (20, 22) are arranged in series along the longitudinal axis (42) of the car, and a second configuration in which the aperture (18) is open and the panels (20, 22) are stored in the passenger compartment (10). The front edge (50) of the closure element (12) of the luggage compartment (10) is adjacent the rear edge (52) of the panel (20) which is in the rearmost position in the first, closed configuration.

## Description

The present invention relates to a motor car with an openable roof. In more detail, the roof of this motor car has an aperture with at least first and second slidable panels selectively positionable in a first configuration closing the aperture or in a second configuration in which the aperture is open.

The object of the present invention is to provide a motor car of the type described above which can be configured selectively either as a spider model or a coupé model.

This object is achieved according to the invention by providing a motor car including a rear luggage compartment with an upper closure element, and a roof having an aperture in the median and rear portions of the passenger compartment, with which are associated at least first and second sliding panels selectively positionable in a first configuration closing the aperture, in which the said panels are arranged next to each other in series along the longitudinal axis of the car, and a second configuration in which the aperture is open and the said panels are stored in the luggage compartment, the front edge of the said luggage compartment covering element being adjacent the rear edge of the rearmost panel in the said first closed configuration.

In the first closed configuration, the motor car has the appearance of a coupé, while in the second open configuration it has the appearance of a spider. The conversion from one configuration to the other is achieved simply and rapidly, by sliding the aforesaid panels.

Further advantages and characteristics of the present invention will become apparent from the following detailed description, provided purely by way of non-limitative, example with reference to the appended drawings, in which:
Figure 1 is a longitudinally sectioned schematic view of a car of the invention configured as a coupé,
Figures 2 to 5 are longitudinally sectioned schematic views of the car of Figure 1, illustrating various stages in the conversion from the coupé configuration to the spider configuration,
Figure 6 is a longitudinally sectioned schematic view of the car of the invention configured as a spider,
Figure 7 is a schematic perspective view of the car of the invention configured as a coupé, and
Figure 8 is a schematic perspective view of the car of the invention configured as a spider.

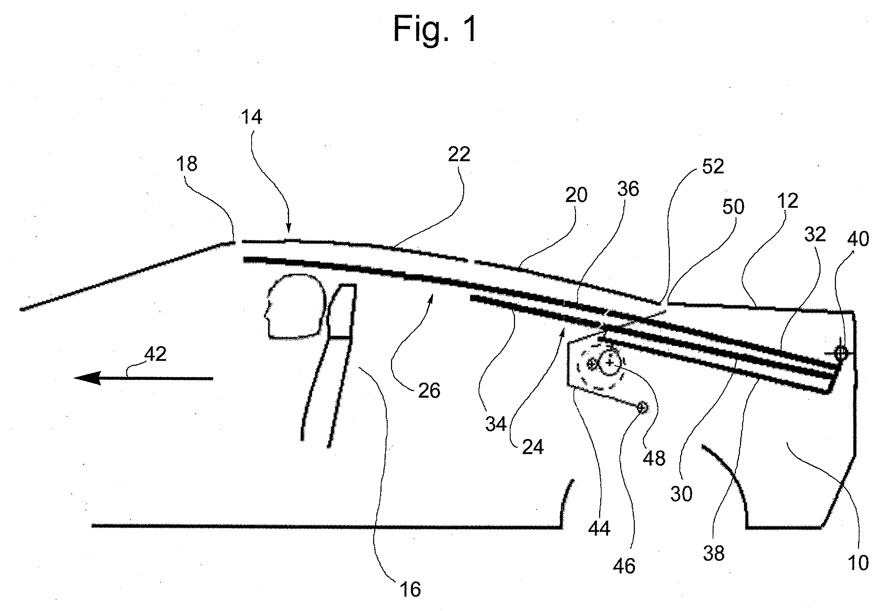

A motor car (see Figure 1) includes a rear luggage compartment 10 having an upper closure element 12 and a roof 14 with an aperture 18 over the median and rear portions of the passenger compartment 16 which has associated first and second sliding panels 20, 22. It is an advantage if both the panels 20, 22 are made of a transparent material, such as glass or a plastics material, for example.

At each side, the motor car also includes a first guide 24 for the first panel 20 to slide along and a second guide 26 for the second panel 22 to slide along. Each guide 24, 26 is formed by forward portions 34 and 36 respectively, fixed to the body and rear portions 30 and 32 respectively fixed to a support structure 38. This latter is pivoted by its rear portion about a first axis 40 orthogonal to the longitudinal axis 42 of the car and has actuator means 48 for causing it to rotate about this axis 40. The two portions of each guide 24, 26 are simply positioned next to each other and are not connected in any way, whereby each movable portion 30, 32 is able to be rotated without any hindrance from the respective fixed portions 34, 36.

The structure and manufacturing technique of the guides 24, 26 of the support structure 38 and the associated actuator means 48 are known per se and can be manufactured using any method familiar to a man skilled in the art; they are therefore not described in detail here. The sliding movement of the panels 20, 22 is also conventional per se and can be controlled either manually or by any type of actuator member. Structures of this type are described, for example, in the documents DE- A-101 21 147 and WO-A-95 29 073.

The motor car also includes a separating member between the luggage compartment 10 and the passenger compartment 16, constituted by a shaped partition 44 pivoted by its lower edge about a second axis 46 orthogonal to the longitudinal axis 42 of the motor car. In alternative embodiments of the invention which are not illustrated in the drawings, the partition 44 could be mounted slidably. In either case, the partition 44 has operating means, which are known per se, for moving it from a position in which it separates the luggage compartment 10 from the passenger compartment 16, into a position in which the luggage compartment 10 is in communication with the passenger compartment 16, and back again.

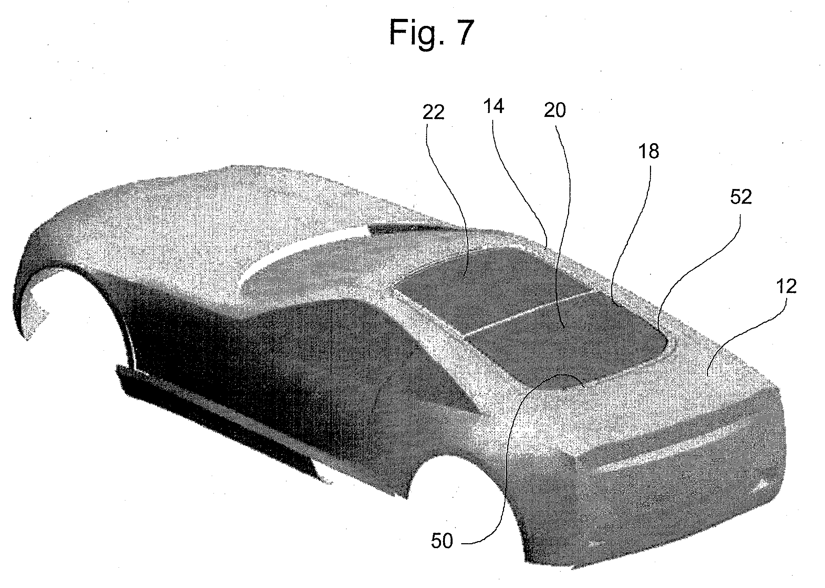

The panels 20, 22 can be positioned (see Figures 1 and 7) in a first configuration closing the aperture 18, in which they are arranged in series along the longitudinal axis 42 of the vehicle, and the front edge 50 of the element 12 for closing the luggage compartment 10 is adjacent the rear edge 52 of the first panel 20 which is in the rearmost position. In this configuration, the motor vehicle has the appearance of a coupé with the first panel 20 acting as rear window and the luggage compartment 10 separated from the passenger compartment 16 by the partition 44 which is in its closed position.

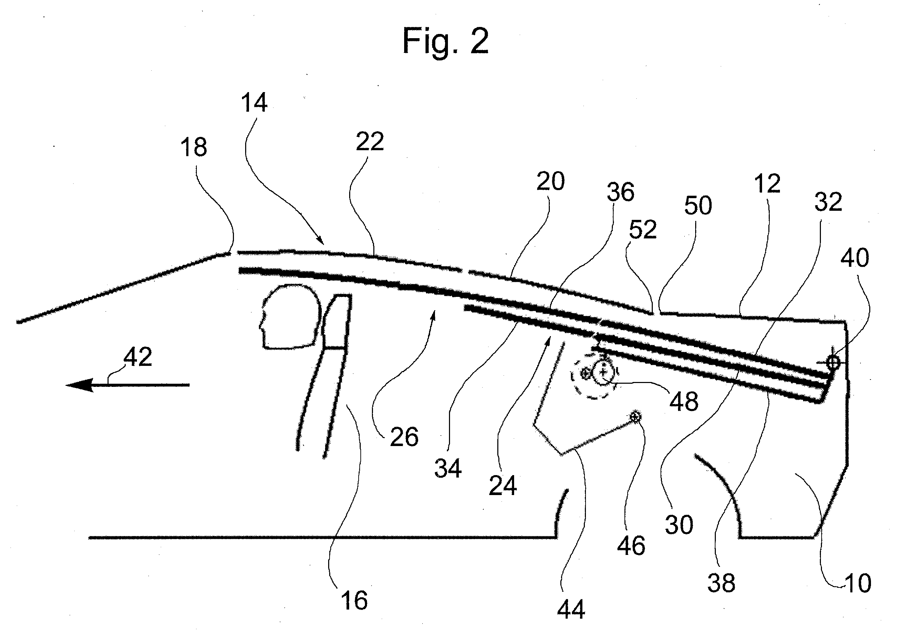

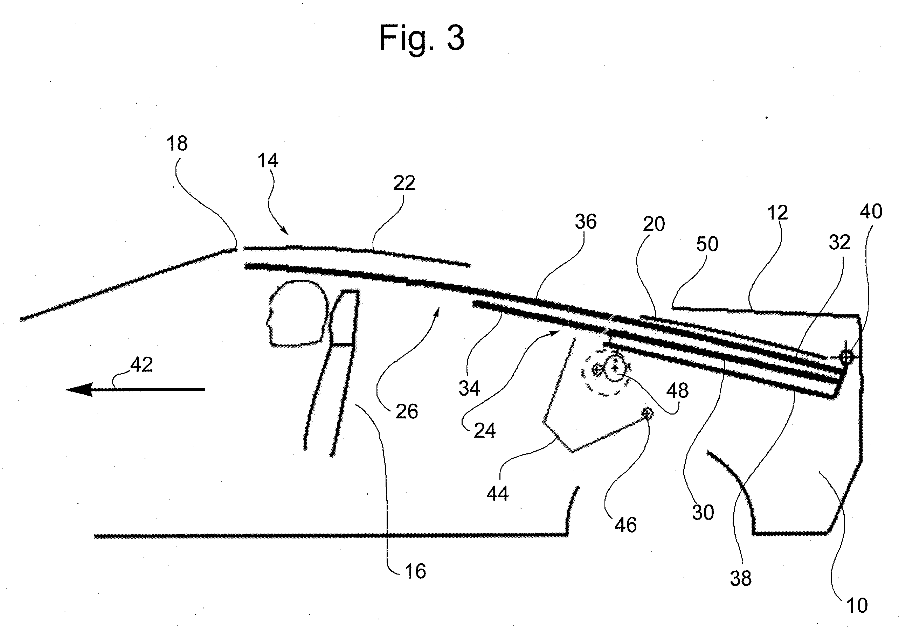

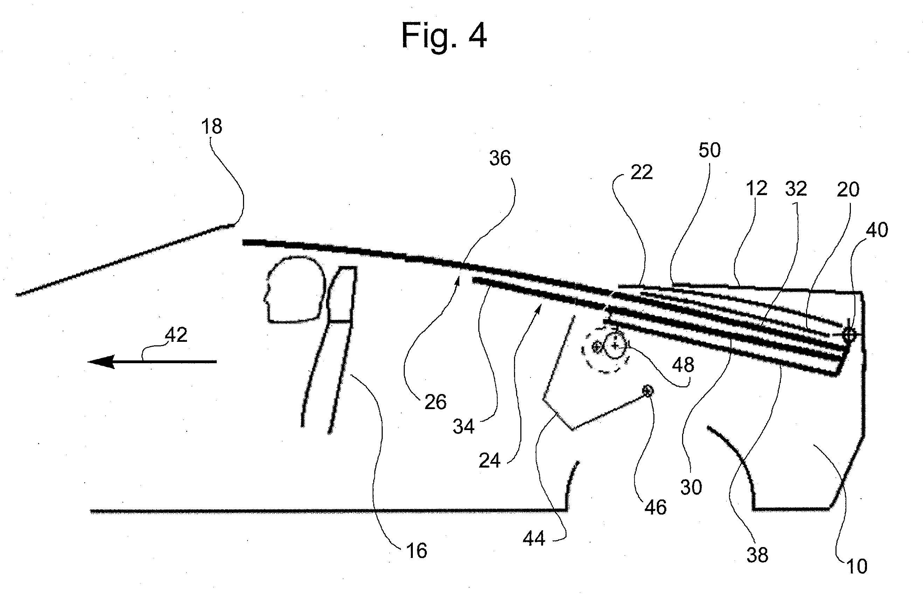

In order to convert the vehicle into its spider configuration, the partition 44 must first be rotated about its axis 46 (see Figure 2), thereby placing the luggage compartment 10 in communication with the passenger compartment 16. The first panel 20 (see Figure 3) and the second panel 22 (see Figure 4) are then slid back on their respective guides 24, 26. When these operations have been completed, the aperture 18 is completely uncovered and the panels 20, 22 are stored one on top of the other on the respective portions 30, 32 of the guides 24, 26 which are fixed to the support structure 38.

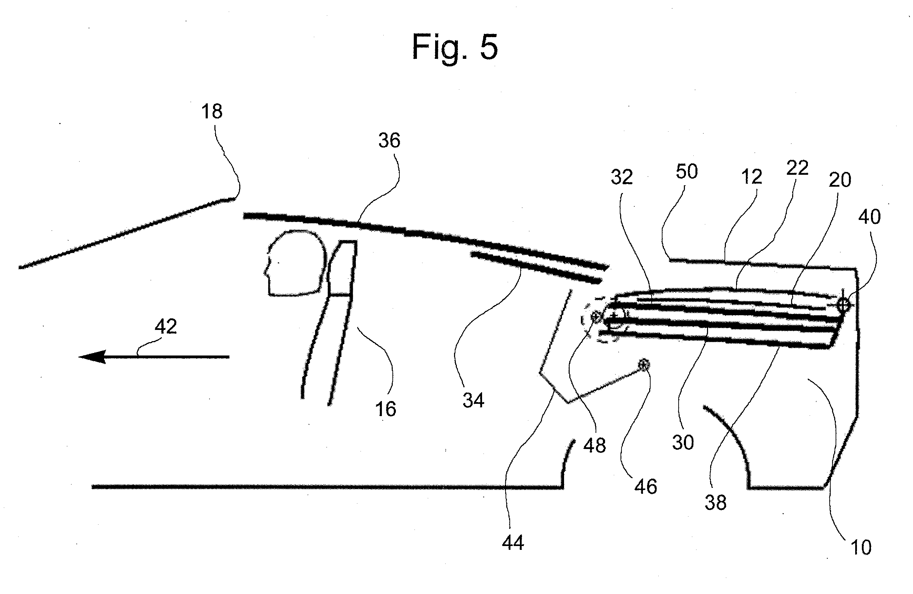

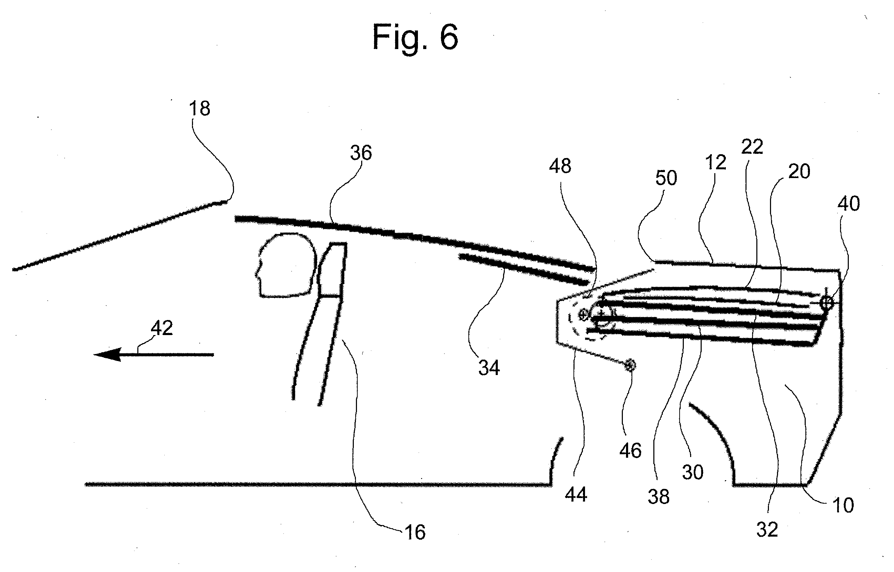

The respective actuator means then control the support structure 38, with its associated panels 20, 22 (see Figure 5) to rotate downwards about the first axis 40 orthogonal to the longitudinal axis 42, and then control the partition 44 (see Figure 6) to rotate upwards about the second axis 46 orthogonal to the longitudinal axis 42.

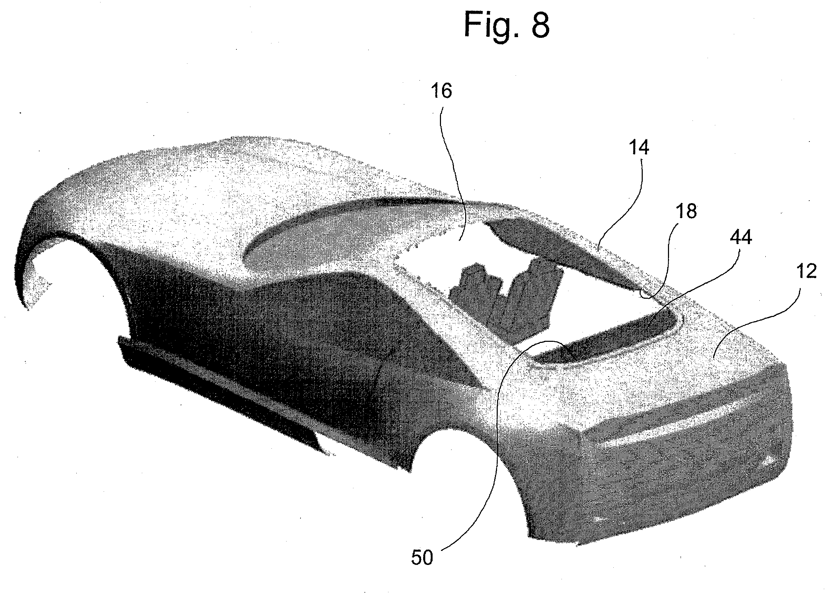

The motor car is now in its spider configuration (see Figures 6 and 8), in which the aperture 18 is completely open, with no transverse elements or the like covering it, while the structure 38 which supports the panels 20, 22 is housed in the upper portion of the luggage compartment 10, beneath the cover element 12. The luggage compartment 10 is separated from the passenger compartment 16 by the partition 44, in such a way that the aesthetics of the motor car are not spoilt by the panels 20, 22 stored on top of each other in the support structure 38, as these panels 20, 22 cannot be seen.

In order to reconfigure the car as a coupé, one need only carry out the operations described above in the reverse order.

Naturally, the principle of the invention remaining unchanged, manufacturing details and embodiments can vary widely from those described purely by way of non-limitative example, without departing thereby from the scope of the invention. In particular, the motor car of the invention could have either a single row of seats or a front row and a back row, the number of sliding roof panels could be selected from any number equal to or greater than two, while the element for closing the luggage compartment could be either fixed or movable.

## Claims

1. A motor car including a luggage compartment (10) with an upper closure element (12) and a roof (14) having an aperture (18) over the median and rear portions of the passenger compartment (16) with at least first and second sliding panels (20, 22) positionable selectively to a first configuration closing the aperture (18), in which the said panels (20, 22) are arranged next to each other in series along the longitudinal axis (42) of the vehicle, and a second configuration in which the aperture (18) is open and the said panels (20, 22) are stored in the luggage compartment (10), the front edge (50) of the said element (12) for closing the luggage compartment (10) being adjacent the rear edge (52) of the panel (20) which is in the rearmost position in the said first closed configuration.

2. A motor car according to Claim 1, including, along each side, a first guide (24) for the first panel (20) to slide along and a second guide (26) for the second panel (220) to slide along, each of the said first and second guides (24, 26) being formed by a front portion (34, 36) fixed to the body and a rear portion (30, 32) secured to a support structure (38) pivoted by its rear portion about a first axis (40) orthogonal to the longitudinal axis (42) of the motor car and having operating means operable to rotate it about the said orthogonal axis (40).

3. A motor car according to either preceding Claim, in which at least the panel (20) in the rearmost position in the first, closed configuration is made of a transparent material.

4. A motor car according to any preceding Claim, including a plurality of sliding panels (20, 22).

5. A motor car according to any preceding Claim, including a member for separating the luggage compartment (10) from the passenger compartment (16), with actuator means for moving it from a position in which it separates the luggage compartment (10) from the passenger compartment (16) into a position in which the luggage compartment (10) is in communication with the passenger compartment (16), and back again.

6. A motor car according to Claim 5, in which the said separating member is in the form of a shaped partition (44) pivoted by its lower edge about a second axis (46) orthogonal to the longitudinal axis (42) of the motor car.

7. A motor car according to Claim 5, in which the said selective closure member is formed by a shaped partition (44) slidably mounted on guides.

8. A motor car according to any preceding Claim, in which, in the second configuration, with the aperture (18) open, the said panels (20, 22) are stored one on top of the other within the support structure (38) housed in the upper portion of the luggage compartment (10) beneath the closure element (12).
